(19) Europäisches Patentamt
European Patent Office
Office européen des brevets

(11) **EP 1 829 754 A1**

(12) **EUROPEAN PATENT APPLICATION**

(43) Date of publication:
**05.09.2007 Bulletin 2007/36**

(51) Int Cl.:
**B60R 21/015** (2006.01)

(21) Application number: **06110564.9**

(22) Date of filing: **01.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **IEE INTERNATIONAL ELECTRONICS & ENGINEERING S.A.**
**6468 Echternach (LU)**

(72) Inventors:
• **Decoster, Yves**
**6760 Ethe (BE)**
• **Orsello, Roberto**
**1251 Luxembourg (LU)**

(74) Representative: **Beissel, Jean et al**
**Office Ernest T. Freylinger S.A.,**
**B.P. 48**
**8001 Strassen (LU)**

(54) **Child seat presence and/or orientation detection system**

(57) A child seat presence and/or orientation detection system for detecting, on a vehicle seat, presence and/or orientation of a transponder-equipped child seat comprises a loop-shaped transmission antenna for transmitting an electromagnetic excitation field and a loop-shaped reception antenna for receiving an electromagnetic response field emitted by a transponder of a child seat in response to the electromagnetic excitation field. The loop-shaped transmission antenna surrounds a first, the loop-shaped reception antenna a second area. The second area includes an overlap area with the first area. The second area also includes a non-overlap area with the first area, i.e. an area which is part of the second area but does not overlap with the first area, such that the magnetic flux caused by the loop-shaped transmission antenna in the non-overlap area is of opposite sign with respect to the magnetic flux caused by the loop-shaped transmission antenna in the overlap area.

Fig. 1

# Description

## Technical field

The present invention generally relates to a system for detecting presence and/or orientation of a child seat placed on a passenger seat of a vehicle, e.g. a motor vehicle equipped with an airbag protection system.

## Background Art

Although the merit of airbags is nowadays widely recognized in terms of passenger safety, there are, however, situations in which the deployment of an airbag may be harmful, or even constitute serious danger. There are currently on the market many types of auxiliary child or infant seats, which are designed to be installed on the front passenger seat. Of these seats, some are designed to face in the direction of travel of the vehicle, and others in the opposite direction with the back turned towards the glove box or the dashboard and some may be installed either way round as desired.

For most rear-facing child seats, there is a risk that the deployment of the airbag will throw the child together with the seat violently towards the rear of the vehicle and cause serious injury to the child. It has also been noted that airbag deployment can also be dangerous for a child installed in a forward-facing child seat, so that some manufacturers recommend that an airbag be disabled whenever the seat with which it is associated is occupied by an auxiliary child seat. There are known methods and installations for detecting the presence and/or orientation of a child seat placed on a passenger seat of a vehicle, which can be connected to an airbag control unit in order to enable or disable the airbag associated with the passenger seat. For a detailed description of such a system, the reader is referred to US patent 5,618,056, which discloses a system comprising transmission and reception antennas integrated in a vehicle seat. The transmitting antennas emit an electromagnetic field that energises a transponder in a child seat, which in turn influences the electromagnetic coupling between the transmission and reception antennas.

In order to achieve good electromagnetic coupling between the transponder in the child seat and the transmission, respectively the reception antenna, the transmission and the reception antennas of such systems are preferably situated close to the upper surface of the seating portion, e.g. between the seat trim and the foam cushion. For some types of car seats, however, arranging the antennas close to the upper surface of the seating portion is difficult or even impossible due to the seat design. Such a situation may arise, for instance, if the seat trim is highly tensioned, which makes antennas there beneath apparent, or if the crimp channels are numerous or deep. In such a case, it may be required to arrange the antennas deeper inside the foam cushion, which however can negatively affect detection performance.

## Object of the invention

It is an object of the present invention to provide a child seat presence and/or orientation detection (CPOD) system with improved detection performance. This object is achieved by a system as claimed in claim 1.

## General Description of the Invention

A child seat presence and/or orientation detection system for detecting, on a vehicle seat, the presence and/or orientation of a transponder-equipped child seat comprises a loop-shaped transmission antenna for transmitting an electromagnetic excitation field and at least one loop-shaped reception antenna for receiving an electromagnetic response field emitted by a transponder (e.g. an RFID transponder) of a child seat in response to the electromagnetic excitation field. The loop-shaped transmission antenna surrounds a first, the loop-shaped reception antenna a second area. The second area includes an overlap area with the first area, i.e. an area wherein the first and second areas overlap. According to an important aspect of the invention, the second area also includes a non-overlap area with the first area, i.e. an area which is part of the second area but does not overlap with the first area, such that the magnetic flux caused by the loop-shaped transmission antenna in the non-overlap area is of opposite sign with respect to the magnetic flux caused by the loop-shaped transmission antenna in the overlap area. It will be appreciated that the current induced in the reception antenna by the magnetic flux through the overlap area and the current induced in the reception antenna by the magnetic flux through the non-overlap area at least partially cancel each other because of the opposite sign of the magnetic fluxes.

Preferably, the non-overlap area is dimensioned in such a way that the magnetic flux caused by the loop-shaped transmission antenna in the non-overlap area is substantially equal in magnitude (i.e. in absolute value) to the magnetic flux caused by the loop-shaped transmission antenna in the overlap area. Those skilled in the art will appreciate that in this case, the current induced in the reception antenna by the magnetic flux through the non-overlap area substantially cancels the current induced in the reception antenna by the magnetic flux through the overlap area. Direct electromagnetic coupling between the loop-shaped transmission antenna and the loop-shaped reception antenna is thus significantly reduced and, as a result, the signal-to-noise ratio is strongly enhanced. Preferably, the magnitude of the magnetic flux through the non-overlap area differs from the magnetic flux through the overlap area by less than 35 % (with respect to the magnetic flux through the overlap area), more preferably by less than 25 % and even more preferably by less than 10 %.

According to a preferred embodiment of the invention, the system comprises two loop-shaped reception antennas, each of which surrounds a respective second area. The second areas include each an overlap area and a non-overlap area with the first area surrounded by the loop-shaped transmission antenna such that, for each one of the loop-shaped reception antennas, the magnetic flux caused by the loop-shaped transmission antenna in the respective non-overlap area is of opposite sign with respect to the magnetic flux caused by the loop-shaped transmission antenna in the respective overlap area. Advantageously, for each one of the loop-shaped reception antennas, the respective non-overlap area is dimensioned in such a way that the magnetic flux caused by the loop-shaped transmission antenna in the respective non-overlap area is substantially equal in magnitude to the magnetic flux caused by the loop-shaped transmission antenna in the respective overlap area. Preferably, the magnitude of the magnetic flux through one of the non-overlap areas differs from the magnetic flux through the corresponding overlap area by less than 35 % (with respect to the magnetic flux through the overlap area), more preferably by less than 25 % and even more preferably by less than 10 %.

The loop-shaped transmission and/or reception antennas can be formed from conductive wires or cables but, advantageously, the said antennas are printed antennas.

As will be appreciated, the system may comprise a flexible substrate whereon the loop-shaped transmission and reception antennas are formed. The loop-shaped transmission antenna may for instance be formed on the first surface of the substrate and the loop-shaped reception antenna(s) may be formed on the second surface of the substrate. As an alternative, the system may be of multi-layered configuration and comprise a first flexible substrate whereon said loop-shaped transmission antenna is formed, a second flexible substrate whereon said loop-shaped reception antenna(s) is/are formed and an intermediate layer, e.g. a double-sided adhesive layer or a bonding layer, sandwiched between the first and second flexible substrate.

The CPOD system according to the present invention is especially suited for being integrated underneath the crimp channels of a foam cushion, e.g. at a depth of 35 mm or more from the top surface of the seating portion. Although at these depths the metal frame structure of the seat is close to the transmission and the reception antennas, the reduction of direct coupling between the transmission and the reception antennas may enhance the systems sensitivity to such an extend that a child seat and its orientation can be reliably detected.

**Brief Description of the Drawings**

Preferred embodiments of the invention will now be described, by way of example, with reference to the accompanying drawings in which:

Fig. 1: is a top schematic view of a seating portion of a vehicle seat equipped with an antenna arrangement of child seat presence and/or orientation detection system incorporated therein;

Fig. 2: is a top view of an antenna arrangement illustrating the concept of the overlap and non-overlap areas of the area surrounded by a reception antenna with the area surrounded by the transmission antenna;

Fig. 3: is an exploded perspective view of a first antenna arrangement for a system as shown in Fig. 1;

Fig. 4: is an exploded perspective view of a second antenna arrangement for a system as shown in Fig. 1;

Fig. 5: is a cross sectional view along the section A-A' of Fig. 4.

**Description of Preferred Embodiments**

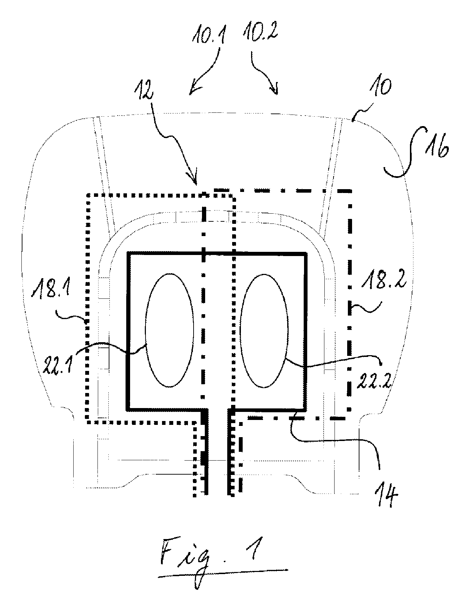

Fig. 1 shows a seating portion 10 of a vehicle seat having a child seat presence and/or orientation detection system 12 incorporated therein. In this embodiment, the CPOD system 12 comprises a loop-shaped transmission antenna 14 arranged centrally underneath the seating surface 16 and two loop-shaped reception antennas 18.1 and 18.2, arranged in the left side 10.1, respectively the right side 10.2 of the seating portion 10.

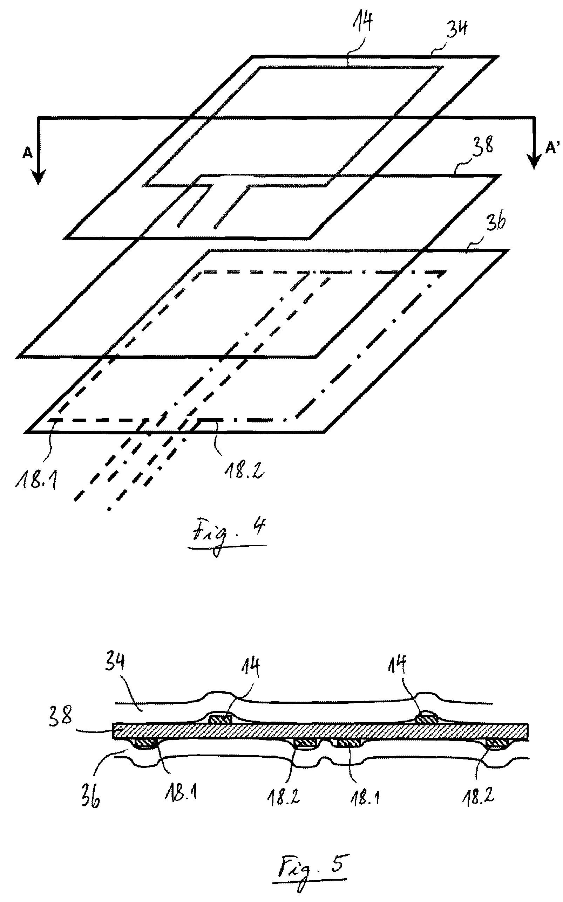

As illustrated in Fig. 3, the antennas 14, 18.1, 18.2 can be formed on both sides of a thin, flexible substrate 20, the transmitting antenna being arranged on a top side 20.1 of the substrate 20, the reception antennas 18.1, 18.2 being arranged on a bottom side 20.2 of the substrate 20.

As illustrated in Figs. 4 and 5, the loop-shaped transmission antenna 14 and the loop-shaped reception antennas 18.1, 18.2 can also be formed on separate substrates 34, 36. In this embodiment, the transmission antenna 14 is printed on a first flexible substrate 34, the reception antennas 18.1, 18.2 are printed on a second flexible substrate 36. The thicknesses of the layers as well as the deformations of the substrates represented in Fig. 5 are not to scale. A double-sided adhesive film 38 bonds together the first and second substrates 34, 36, in such a way that the printed antennas 14, 18.1, 18.2 face the adhesive. The substrates thus form the outer layers of the sandwiched structure and have a protective function. It should be noted that the substrates 34, 36 and and the intermediate adhesive film may comprise more than one component layer.

When integrated into the seating portion 10 of a seat, the antennas 14, 18.1, 18.2 of the antenna arrangements of Figs. 3 to 5 extend substantially parallel to the surface 16 of the seating portion 10.

When a child seat equipped with resonators, such as RFID tags, is correctly attached to the vehicle seat, these resonators are located above the areas indicated by reference numerals 22.1 and 22.2. Powered by the electromagnetic field transmitted by the transmission antenna 14, the resonators of the child seat produce electromagnetic response fields that are received at reception antennas 18.1 and 18.2. A control unit (not shown) connected to the reception antennas 18.1, 18.2 may derive from the electromagnetic response fields the type and the orientation of the child seat placed on the seating portion 10.

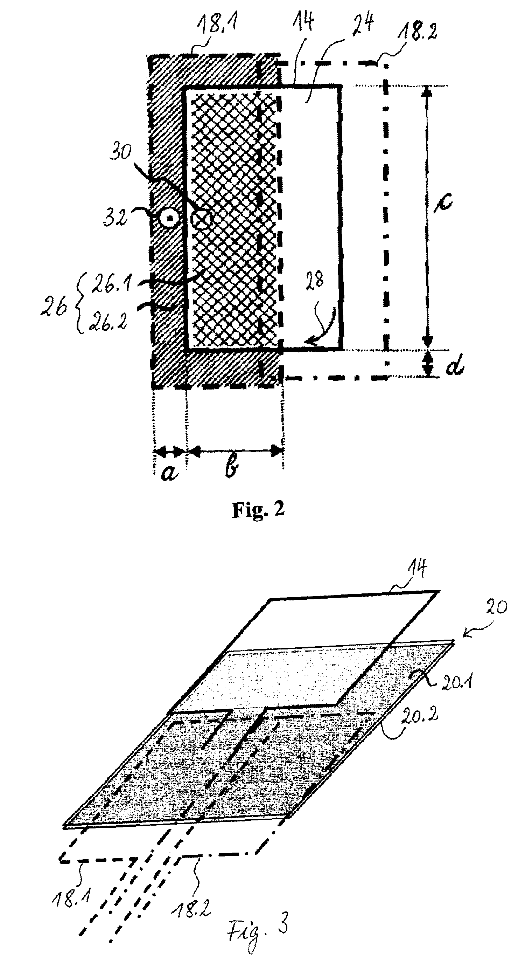

As can be best seen in Fig. 2, the transmitting antenna 14 forms the boundary of a first area 24, whereas the reception antenna 18.1 forms the boundary a second area 26, which includes an overlap area 26.1 and a non-overlap area 26.2 with the first area 24. The situation is analogous for the reception antenna 18.2 and therefore not discussed in detail. The magnetic flux Φ through an area A can be calculated by the formula:

$$\Phi = \int_A \vec{B} \cdot d\,\vec{A},$$

where $\vec{B}$ is the magnetic flux density vector and $d\,\vec{A}$ is an infinitesimal surface element vector. In case the current in the transmitting antenna 14 flows in the direction indicated by arrow 28, the magnetic flux density vector in the overlap area 26.1 is directed away from the observer of Fig. 2 (illustrated at reference numeral 30), whereas in the non-overlap area 26.2 the magnetic flux density vector points towards the observer (illustrated at reference numeral 32). As a consequence, the magnetic flux through the overlap area 26.1 is of opposite sign with respect to the magnetic flux through the non-overlap area 26.1.

The current induced by the transmission antenna 14 in the reception antenna 18.1 is determined by the total magnetic flux through the area surrounded by the reception antenna 18.1, i.e. through the second area 26. As shown in Fig. 2, the transmission antenna 14 and the reception antenna 18.1 are dimensioned in such a way that the magnetic flux through the overlap area 26.1 is substantially equal in magnitude to the magnetic flux through the non-overlap area 26.2 so that the currents induced by these magnetic fluxes in the reception antenna 18.1 substantially cancel each other. As a general rule of thumb, good balancing of the magnetic fluxes can be achieved by letting the non-overlap area approximately have the surface of the overlap area. Such a configuration can also be used as a starting point for an optimisation procedure to bring the magnitudes of the magnetic fluxes as close as possible to each other. In Fig. 2, the surface of the overlap area is b·c and the surface of the non-overlap area is a·(c+2d)+b·2d.

**Claims**

1. A child seat presence and/or orientation detection system for detecting, on a vehicle seat, presence and/or orientation of a child seat equipped with a transponder, said system comprising:

   a loop-shaped transmission antenna for transmitting an electromagnetic excitation field, said loop-shaped transmission antenna surrounding a first area;
   a loop-shaped reception antenna for receiving an electromagnetic response field emitted by a transponder of a child seat in response to the electromagnetic excitation field, said loop-shaped reception antenna surrounding a second area, said second area including an overlap area with said first area;
   **characterized in that**
   said second area includes a non-overlap area with the first area such that a magnetic flux caused by said loop-shaped transmission antenna in said non-overlap area is of opposite sign with respect to a magnetic flux caused by said loop-shaped transmission antenna in said overlap area.

2. The system according to claim 1, wherein said non-overlap area is dimensioned in such a way that the magnetic flux caused by said loop-shaped transmission antenna in the non-overlap area is substantially equal in magnitude to the magnetic flux caused by said loop-shaped transmission antenna in said overlap area.

3. The system according to claim 1 or 2, comprising two loop-shaped reception antennas, said loop-shaped reception antennas surrounding respective second areas, said second areas including each an overlap area and a non-overlap area with said first area such that, for each one of said loop-shaped reception antennas, a magnetic flux caused by the loop-shaped transmission antenna in the respective non-overlap area is of opposite sign with respect to a magnetic flux caused by the loop-shaped transmission antenna in the respective overlap area.

4. The system according to claim 3, wherein, for each one of said loop-shaped reception antennas, the respective non-overlap area is dimensioned in such a way that the magnetic flux caused by the loop-shaped transmission antenna in the respective non-overlap area is substantially equal in magnitude to the magnetic flux caused by the loop-shaped transmission antenna in the respective overlap area.

5. The system according any one of the preceding claims, wherein said loop-shaped transmission and/or reception antennas are printed antennas.

6. The system according to any one of the preceding claims, comprising a flexible substrate whereon said loop-shaped transmission and reception antennas are formed.

7. The system according to claim 6, wherein said flexible substrate has a first surface whereon said loop-shaped transmission antenna is formed and a second surface whereon said loop-shaped reception antenna(s) is/are formed.

8. The system according to claim 5, comprising a first flexible substrate whereon said loop-shaped transmission antenna is formed, a second flexible substrate whereon said loop-shaped reception antenna (s) is/are formed and an intermediate layer sandwiched between the first and second flexible substrate.

9. A seating portion of a vehicle seat with a seating surface, said seating portion incorporating a system according to any one of the preceding claims.

10. The seating portion according to claim 9 comprising a left and a right side, wherein said child seat presence and/or orientation detection system comprises two loop-shaped reception antennas, wherein said loop-shaped transmission antenna is arranged centrally underneath said seating surface and wherein said loop-shaped reception antennas are arranged in said left and right sides, respectively.

Fig. 1

**Fig. 2**

Fig. 3

14
34
A
A'
38
36
18.1
18.2

_Fig. 4_

34
14
14
38
36
18.1
18.2
18.1
18.2

_Fig. 5_

8

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 307 518 B1 (HAMPERL REINHARD ET AL) 23 October 2001 (2001-10-23) * column 2, line 11 - column 3, line 40; claims; figures * ----- | 1-10 | INV. B60R21/015 |
| D,A | US 5 618 056 A (SCHOOS ET AL) 8 April 1997 (1997-04-08) * column 2, line 15 - column 4, line 2; claims; figures * ----- | 1-10 | |

TECHNICAL FIELDS
SEARCHED       (IPC)

B60R

The present search report has been drawn up for all claims

| Place of search | Date of completion of the search | Examiner |
|---|---|---|
| The Hague | 31 July 2006 | Daehnhardt, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.** EP 06 11 0564

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2006

| Patent document cited in search report | | Publication date | Patent family member(s) | | Publication date |
|---|---|---|---|---|---|
| US 6307518 | B1 | 23-10-2001 | DE | 29619668 U1 | 06-02-1997 |
| US 5618056 | A | 08-04-1997 | AT | 183154 T | 15-08-1999 |
| | | | BR | 9504420 A | 27-05-1997 |
| | | | CA | 2160626 A1 | 18-04-1996 |
| | | | DE | 69511349 D1 | 16-09-1999 |
| | | | DE | 69511349 T2 | 30-03-2000 |
| | | | EP | 0708002 A1 | 24-04-1996 |
| | | | ES | 2136229 T3 | 16-11-1999 |
| | | | JP | 8225058 A | 03-09-1996 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5618056 A